(19) Europäisches Patentamt
European Patent Office
Office européen des brevets

(11) **EP 4 395 196 A1**

(12) **EUROPEAN PATENT APPLICATION**
published in accordance with Art. 153(4) EPC

(43) Date of publication:
**03.07.2024 Bulletin 2024/27**

(21) Application number: **22890188.0**

(22) Date of filing: **28.09.2022**

(51) International Patent Classification (IPC):
*H04B 7/06* (2006.01)    *H04B 7/0404* (2017.01)
*H04B 17/318* (2015.01)    *H04B 17/336* (2015.01)
*H04M 1/02* (2006.01)    *H04W 72/04* (2023.01)

(52) Cooperative Patent Classification (CPC):
**H04B 7/0404; H04B 7/06; H04B 17/318;
H04B 17/336; H04M 1/02; H04W 72/04**

(86) International application number:
**PCT/KR2022/014569**

(87) International publication number:
**WO 2023/080453 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.11.2021 KR 20210148714**

(71) Applicant: **Samsung Electronics Co., Ltd.
Suwon-si, Gyeonggi-do 16677 (KR)**

(72) Inventors:
• **PARK, Sungchul**
**Suwon-si, Gyeonggi-do 16677 (KR)**
• **YOON, Suha**
**Suwon-si, Gyeonggi-do 16677 (KR)**
• **JUNG, Euichang**
**Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **ELECTRONIC DEVICE AND OPERATING METHOD THEREOF**

(57) An electronic device according to various embodiments of the present disclosure may comprise a plurality of antennas and a processor, wherein the processor: performs a diversity operation on a signal received using a plurality of antennas; determines whether the electronic device is in a folded state; on the basis of the determination, measures the quality of a signal generated by performing the diversity operation; identifies whether the measured quality of the signal is higher than a threshold value; and when it is identified that the measured quality of the signal is not higher than the threshold value, receives a signal by using only a part of the plurality of antennas, and the threshold value is a value determined on the basis of the quality of a signal received through a part of the plurality of antennas.

FIG. 3

## Description

### [Technical Field]

Various embodiments of the disclosure relate to an electronic device and a method of operating the same, and more particularly, to a foldable electronic device including a plurality of antennas and a method of operating the same.

### [Background Art]

Types of electronic devices are becoming more diverse due to technology development and user demands. For example, in order to support wider displays, electronic devices are changing to foldable electronic devices or rollable electronic devices. In the foldable electronic device, a housing including a display may be folded or unfolded, and in the rollable electronic device, a housing including a display may be rolled in and drawn into the housing or rolled out and taken out from the housing.

### [Disclosure of Invention]

### [Technical Problem]

As form factors of electronic devices become more diverse, factors affecting a performance of the electronic devices are also becoming more diverse. In electronic devices with a fixed form, positions of internal components are fixed, but in electronic devices whose form may be modified, positions of internal components may be relatively different. The positions of internal components may affect a performance. For example, in the case of an electronic device including a plurality of antennas, a communication performance may vary according to a distance between the plurality of antennas.

The disclosure may provide an electronic device and a method capable of controlling a communication performance according to a modified form.

### [Solution to Problem]

According to various embodiments of the disclosure, an electronic device may include a plurality of antennas; and a processor, wherein the processor may be configured to perform a diversity operation on signals received using the plurality of antennas, to determine whether the electronic device is in a folded state, to measure a quality of a signal generated by performing the diversity operation based on the determination, to identify whether the quality of the measured signal is higher than a threshold, and to receive the signal using only some antennas of the plurality of antennas, if a quality of the measured signal is not higher than the threshold, wherein the threshold may be a value determined based on the quality of the signal received by some antennas of the plurality of antennas.

According to various embodiments of the disclosure, an electronic device may include a plurality of antennas; and a processor, wherein the processor may be configured to perform a multi input multi output (MIMO) operation with the plurality of antennas to receive a signal including a control channel and a data channel, to determine whether the electronic device is in a folded state, to decode the control channel among the received signals based on the determination, to transmit a NACK signal corresponding to the data channel to a base station after a designated data channel reception time has elapsed, to receive a signal including information on the changed number of MIMO layers from the base station, and to receive and decode a signal from the base station with the changed number of MIMO layers.

According to various embodiments of the disclosure, a base station may include an antenna; and a processor, wherein the processor may be configured to transmit data to an electronic device using the antenna, to receive feedback on the transmitted data, to identify whether the received feedback is NACK, to identify whether NACK signals are continuously received from the electronic device during a predetermined time period or a predetermined number of times or more, if the received feedback is NACK, and to transmit information indicating the number of layers lower than a previous value to the electronic device, if NACK signals are continuously received from the electronic device during a predetermined time period or a predetermined number of times or more.

According to various embodiments of the disclosure, a method of operating an electronic device may include performing a diversity operation on signals received using a plurality of antennas; determining whether the electronic device is in a folded state; measuring a quality of a signal generated by performing the diversity operation based on the determination; identifying whether the quality of the measured signal is higher than a threshold; and receiving, if the quality of the measured signal is not higher than the threshold, a signal using only some antennas of the plurality of antennas, wherein the threshold may be a value determined based on the quality of the signal received by some antennas of the plurality of antennas.

According to various embodiments of the disclosure, a method of operating an electronic device may include receiving a signal including a control channel and a data channel by performing a multi input multi output (MIMO) operation with a plurality of antennas; determining whether the electronic device is in a folded state; decoding the control channel among the received signals based on the determination; transmitting a NACK signal corresponding to the data channel to a base station after a designated data channel reception time has elapsed; receiving a signal including information on the changed number of MIMO layers from the base station; and receiving and decoding a signal from the base station with the changed number of MIMO layers.

According to various embodiments of the disclosure, a method of operating a base station may include transmitting data to an electronic device; receiving feedback on the transmitted data; identifying whether the received feedback is NACK; identifying, if the received feedback is NACK, whether NACK signals are continuously received from the electronic device during a predetermined time period or a predetermined number of times or more; and transmitting, if NACK signals are continuously received from the electronic device during a predetermined time period or a predetermined number of times or more, information indicating the number of layers lower than a previous value to the electronic device.

**[Advantageous Effects of invention]**

According to various embodiments of the disclosure, in the case that a state of an electronic device is changed, an operation of an antenna that has little effect on a communication performance can be stopped, thereby reducing an amount of a consumed current.

According to various embodiments of the disclosure, an amount of a current consumed by an electronic device can reduce; thus, an amount of heat generated can reduce, and a lifespan of a battery can increase.

**[Brief Description of Drawings]**

FIG. 1 is a block diagram illustrating an electronic device in a network environment according to various embodiments.

FIGS. 2A and 2B are diagrams illustrating an unfolded state and a folded state of a foldable electronic device according to various embodiments.

FIG. 3 is an example of a flowchart of the electronic device of FIGS. 2A and 2B according to various embodiments.

FIG. 4 is another example of a flowchart of the electronic device of FIGS. 2A and 2B according to various embodiments.

FIG. 5 is another example of a flowchart of the electronic device of FIGS. 2A and 2B according to various embodiments.

FIGS. 6A and 6B are diagrams illustrating an unfolded state and a folded state of different types of foldable electronic devices according to various embodiments.

FIG. 7 is an example of a flowchart of the electronic device of FIGS. 6A and 6B according to various embodiments.

FIG. 8 is another example of a flowchart of the electronic device of FIGS. 6A and 6B according to various embodiments.

FIG. 9 is an example of a flowchart of the electronic device of FIG. 6B according to various embodiments.

FIG. 10 is a flowchart of a base station according to various embodiments.

**[Mode for the Invention]**

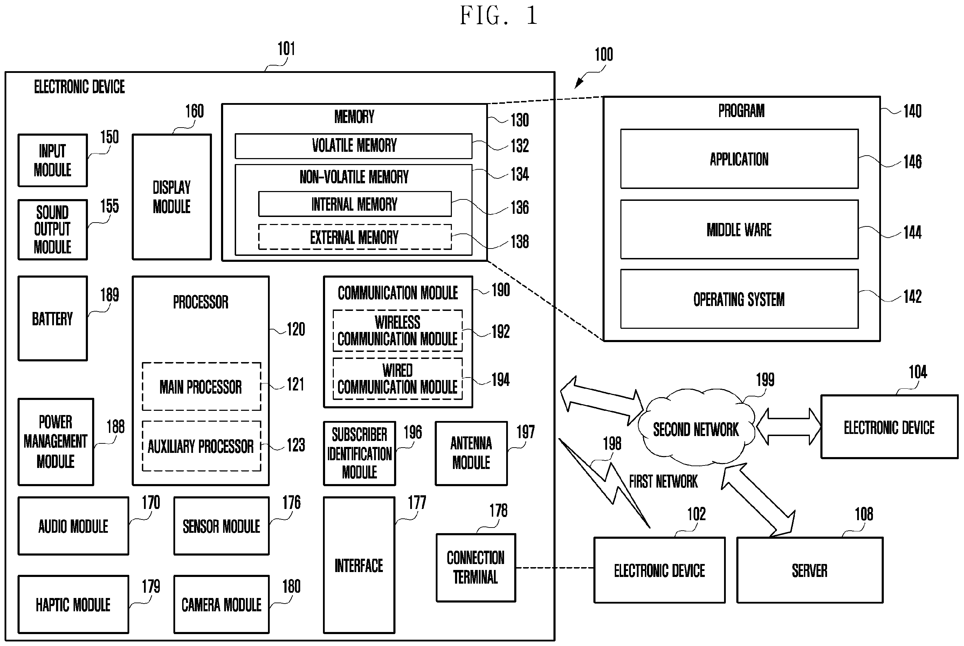

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

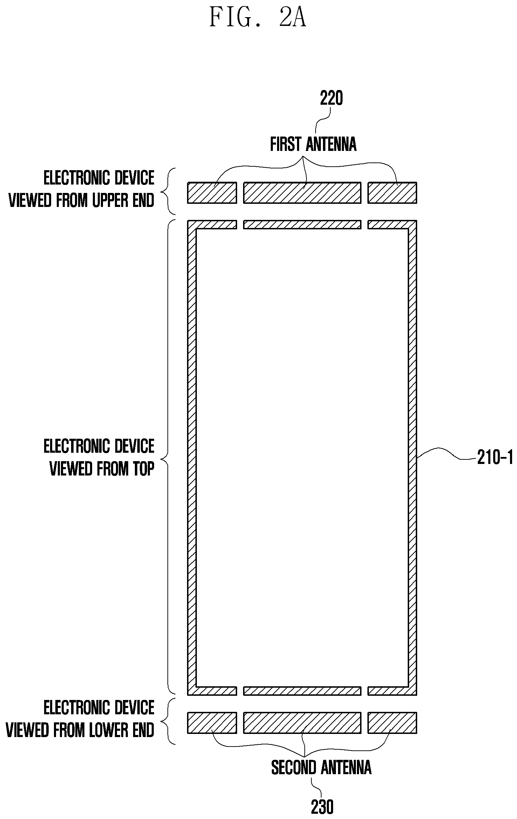

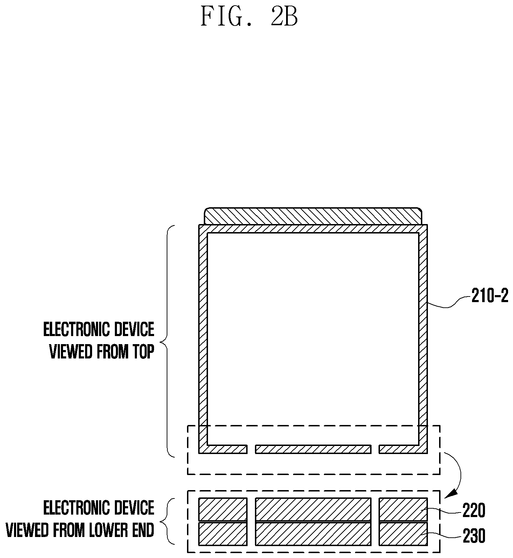

FIGS. 2A and 2B are diagrams illustrating an unfolded state and a folded state of a foldable electronic device according to various embodiments.

According to an embodiment, the foldable electronic device may include a plurality of antennas. In FIGS. 2A and 2B, the foldable electronic device may include a first antenna 220 and a second antenna 230. The first antenna 220 and the second antenna 230 may be positioned at both ends of the foldable electronic device in an unfolded state 210-1 (or in an open state), as illustrated in FIG. 2A. In the unfolded state 210-1 of the foldable electronic device, a gap between the first antenna 220 and the second antenna 230 may be λ (wavelength)/4 or more. The foldable electronic device 210-1 in the unfolded state may perform multi-input multi-output (MIMO) or/and diversity operations using the first antenna 220 and the second antenna 230. For example, the foldable electronic device 210-1 in an unfolded state may perform a diversity operation using maximal ratio combining (MRC), as illustrated in [Equation 1].

$$[Equation\ 1]$$
$$y_1 = h_1 x + n$$
$$y_2 = h_2 x + n$$

$$\hat{x} = \frac{h_1^* y_1 + h_2^* y_2}{|h_1|^2 + |h_2|^2}$$

y1: received signal of the first antenna, y2: received signal of the second antenna,
h1: channel gain of the first antenna, h2: channel gain of the second antenna
n: AWGN(additive white Gaussian noise),
$\hat{x}$: signal generated by performing diversity operation

According to an embodiment, the first antenna 220 and the second antenna 230 may be positioned around each other when the foldable electronic device is in a folded state 210-2 (or in a closed state), as illustrated in FIG. 2B. For example, the first antenna 220 and the second antenna 230 may be positioned right next to each other in the folded state 210-2 of the foldable electronic device and be regarded as being disposed at substantially the same position. When the first antenna 220 and the second antenna 230 are not sufficiently far apart, the correlation between channels formed by each antenna with the antenna of the base station may increase. Therefore, the foldable electronic device may not perform MIMO requiring independent channels or low correlation. When channel correlation increases, a performance of a diversity operation may also decrease; thus, the foldable electronic device may not perform a diversity operation. According to an embodiment, the foldable electronic device may identify whether it is in a folded state to determine whether to perform MIMO and/or a diversity operation.

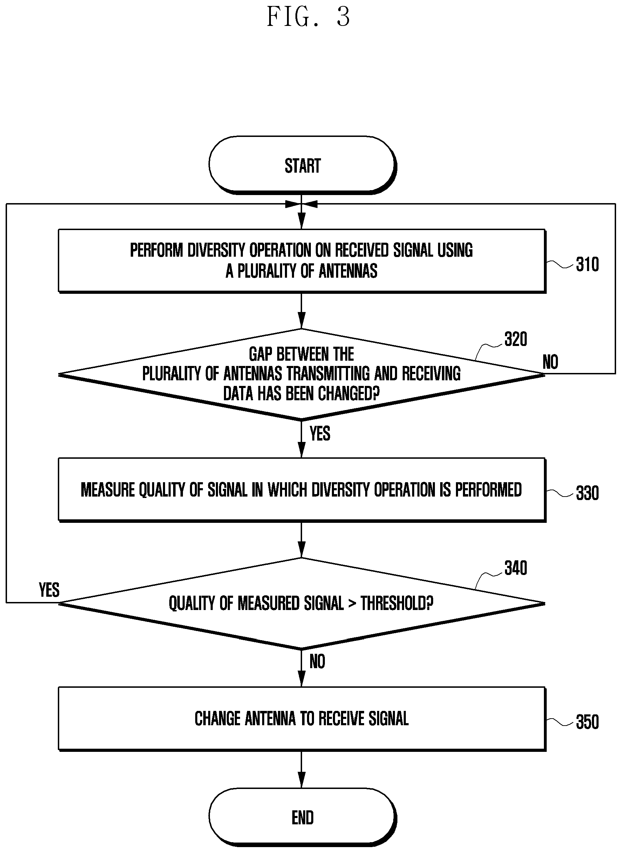

FIG. 3 is an example of a flowchart of the electronic device of FIGS. 2A and 2B according to various embodiments.

With reference to FIG. 3, in operation 310, the electronic device (e.g., the foldable electronic devices 210-1 and 210-2 of FIG. 2A or 2B) may perform a diversity operation on a received signal using a plurality of antennas (e.g., the first antenna 220 or the second antenna 230 of FIG. 2A or 2B). According to an embodiment, the electronic device may perform a diversity operation when it is in an unfolded state.

According to an embodiment, in operation 320, the electronic device may identify whether a gap between a plurality of antennas has been changed. For example, when the state of the electronic device is changed from an unfolded state to a folded state, the gap between the plurality of antennas may be narrowed. As another example, when the state of the electronic device is changed from a folded state to an unfolded state, the gap between the plurality of antennas may be widened. The electronic device may identify whether the state of the electronic device has been changed to a folded state or an unfolded state using sensors. For example, the electronic device may identify whether the state of the electronic device has been changed using a contact sensor. As another example, the electronic device may include magnets and Hall sensors to identify whether the state of the electronic device has been changed. As another example, the electronic device may include a plurality of acceleration/gyro sensors to identify whether the state of an electronic device has been changed. According to an embodiment, when the gap between the plurality of antennas becomes smaller than a predetermined value, the electronic device may determine that the gap between the plurality of antennas has been narrowed. When the gap between the plurality of antennas becomes greater than a predetermined value, the electronic device may determine that the gap between the plurality of antennas has been widened.

According to an embodiment, if the gap between the plurality of antennas has not been changed, the electronic device may perform operation 310. If the gap between the plurality of antennas has not been changed, the electronic device may continue to receive signals to perform a diversity operation.

According to an embodiment, in operation 330, if the gap between the plurality of antennas has been changed, the electronic device may perform a diversity operation on the received signal using the plurality of antennas to measure a quality of a generated signal. For example, the quality of the signal measured by the electronic device may be measured based on at least one of a signal gain, reference signals received power (RSRP), reference signal received quality (RSRQ), received signal strength indicator (RSSI), or signal to interference noise ratio (SINR).

According to an embodiment, in operation 340, the electronic device may identify whether the quality of the measured signal is higher than a threshold. According to an embodiment, the threshold may be a value higher by a predetermined value than a quality of a signal received by the electronic device using some antennas of the plurality of antennas. For example, when the electronic device includes two antennas, a value higher by a predetermined value than signals with a higher quality among signals received using the two antennas may be the threshold. As another example, when the electronic device includes two antennas, a value higher by a predetermined value than an average quality of signals received using the two antennas may be the threshold.

According to another embodiment, the electronic device may identify whether the difference between a quality of a signal generated by performing a diversity operation and a quality of a signal received using some antennas of the plurality of antennas is greater than the threshold. For example, the electronic device may identify whether the difference between the quality of the signal generated by performing the diversity operation and a quality of a signal of a higher quality among qualities of signals received by each antenna is greater than the threshold.

According to an embodiment, in operation 350, if the quality of the measured signal is not higher than the threshold, the electronic device may change the antenna to receive the signal. For example, the electronic device may reduce the number of antennas for transmitting and receiving data. The electronic device may stop an operation of a circuit related to an antenna that is not used. When an operation of the antenna is stopped, power is not supplied to the related circuit, thereby reducing power consumption.

According to an embodiment, if the quality of the measured signal is higher than the threshold, the electronic device may perform a diversity operation.

According to an embodiment, when a plurality of antennas are placed at substantially the same position, channel gains of signals received using each antenna may be almost the same. The electronic device may estimate a channel using some antennas of a plurality of antennas to perform a diversity operation.

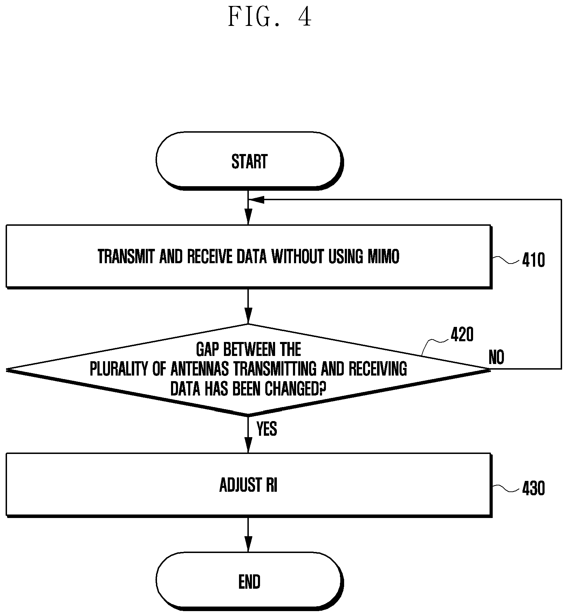

FIG. 4 is another example of a flowchart of the electronic device of FIGS. 2A and 2B according to various embodiments.

With reference to FIG. 4, in operation 410, the electronic device (e.g., the foldable electronic devices 210-1 and 210-2 of FIG. 2A or 2B) may transmit and receive data without using MIMO (or without using MIMO technology). The electronic device may transmit and receive data using single input single output (SISO) rather than MIMO. According to an embodiment, the electronic device may transmit and receive data with SISO in an unfolded state.

According to an embodiment, in operation 420, the electronic device may identify whether a gap between a plurality of antennas has been changed. The gap between a plurality of antennas in the electronic device may be changed as the state of the electronic device is changed. As illustrated in FIGS. 2A and 2B, when the plurality of antennas are disposed at both ends of the electronic device and the electronic device has a foldable structure, the gap between the plurality of antennas may be changed as the state of the electronic device is changed. The electronic device may identify whether the state of the electronic device has been changed to a folded state or an unfolded state using sensors. As another example, the electronic device may include magnets and Hall sensors to identify whether the state of the electronic device has been changed. As another example, the electronic device may include a plurality of acceleration/gyro sensors to identify whether the state of an electronic device has been changed.

According to an embodiment, if the gap between the plurality of antennas has not been changed, the electronic device may perform operation 410.

According to an embodiment, in operation 430, if the gap between the plurality of antennas has been changed, the electronic device may adjust a rank indicator (RI) value indicating a maximum value of the number of data streams that may be transmitted. According to an embodiment, if the gap between the plurality of antennas is narrowed, the electronic device may adjust the RI value to a lower value than a previous value. For example, the adjusted RI value may be the smallest value. According to another embodiment, if the gap between the plurality of antennas is widened, the electronic device may adjust the RI value to a higher value than the previous value. For example, the adjusted RI value may be the largest value.

According to an embodiment, the electronic device may configure the RI value to a low value regardless of a quality of the transmitted and received signal and report it to the base station. The base station may determine that a quality of communication with the electronic device is low and may not change a communication mode of the electronic device to MIMO.

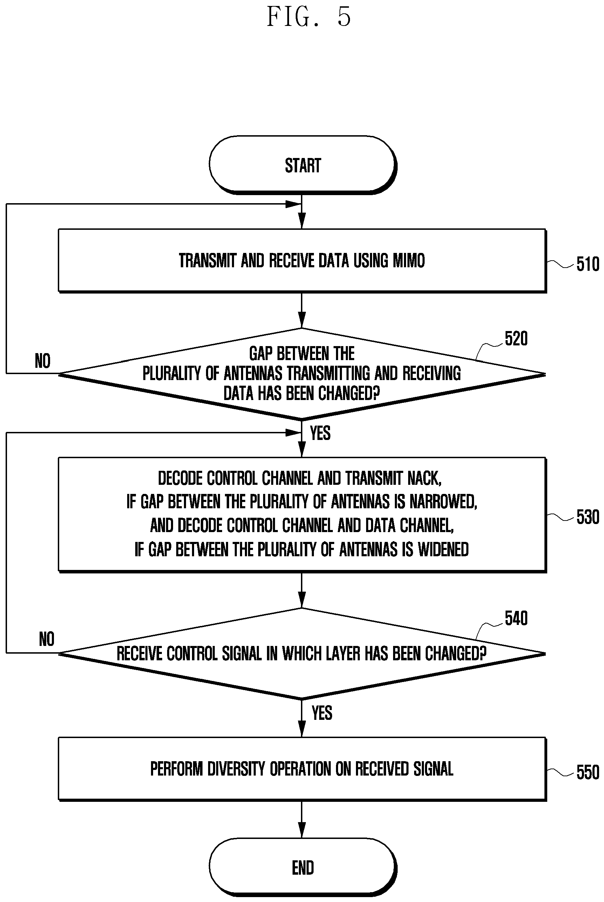

FIG. 5 is another example of a flowchart of the electronic device of FIGS. 2A and 2B according to various embodiments.

With reference to FIG. 5, in operation 510, the electronic device (e.g., the foldable electronic devices 210-1 and 210-2 of FIG. 2A or 2B) may transmit and receive data using MIMO. When using MIMO technology, the electronic device may transmit and receive data to and from the base station using a plurality of paths.

According to an embodiment, in operation 520, the electronic device may identify whether a gap between the plurality of antennas has been changed. When the gap between the plurality of antennas is narrowed, the correlation between the plurality of paths increases; thus, it may be meaningless that the electronic device transmits and receives data to and from the base station through a plurality of paths. In order to determine whether it is meaningless to transmit and receive data through a plurality of paths, the electronic device may identify whether the gap between the plurality of antennas has been narrowed. If the gap between the plurality of antennas is widened, the correlation between the plurality of paths decreases; thus, it may be effective that the electronic device transmits and receives data to and from the base station through a plurality of paths. In order to determine whether to transmit and receive data through the plurality of paths is effective, the electronic device may identify whether the gap between the plurality of antennas has been widened. Operation 520 may be the same as or similar to operation 320 of FIG. 3 and operation 420 of FIG. 4.

According to an embodiment, if the gap between the plurality of antennas is confirmed that it has not been changed, the electronic device may perform operation 510. For example, while transmitting and receiving signals using MIMO, if the gap between a plurality of antennas has not been changed, the electronic device may continue to transmit and receive signals using MIMO.

According to an embodiment, in operation 530, if the gap between the plurality of antennas is narrowed, the electronic device may decode the control channel (or control signal). Even if the gap between the plurality of antennas is narrowed by transmitting and receiving control channels using SISO, the electronic device may perform normal decoding of received signals. If the gap between the plurality of antennas is narrowed, the electronic device may not perform normal decoding of signals received using MIMO to transmit NACK to the base station. The electronic device may receive a signal using MIMO not to decode the data channel (or data signal). The electronic device may receive a signal using MIMO not to decode the data channel (or data signal) and transmit NACK corresponding to the data channel (or data signal) to the base station. As another example, the electronic device may deactivate a receiver related to MIMO in a data channel reception section. The electronic device may deactivate the receiver related to MIMO during the data channel reception section and transmit NACK corresponding to the data channel (or data signal) to the base station.

According to another embodiment, in operation 530, if the gap between the plurality of antennas is widened, the electronic device may decode the control channel (or control signal) and the data channel.

The subsequent operation may be performed after the electronic device previously identified that the gap between the plurality of antennas has been narrowed.

According to an embodiment, in operation 540, the electronic device may identify the decoded control channel to identify whether a layer has been changed. When the electronic device continues to transmit NACK, the base station may change the layer of the electronic device. For example, when the base station receives NACK from the electronic device for 80 ms to 200 ms, the base station may change the layer and transmit the changed layer to the electronic device. The electronic device may not decode the data channel until the changed layer is received. When the electronic device does not decode the data channel, the electronic device may reduce unnecessary current consumption consumed in a decoding operation.

According to an embodiment, in operation 550, if it is confirmed that the layer has been changed, the electronic device may perform a diversity operation on the received signal. The electronic device may perform at least part of the operations of FIG. 3 during a diversity operation.

According to an embodiment, in the case that the state of the electronic device is changed again in a state in which the layer has been changed, in order to change an RI value, the electronic device may transmit a CSI report message. For example, when the state of the electronic device is changed to the unfolded state, the electronic device may configure the RI to 2 and transmit a CSI report message. According to another embodiment, in the case that the state of the electronic device is changed again in a state in which the layer has been changed, in order to report values of RSRP and SINR to a specific threshold, the electronic device may transmit a CSI report message.

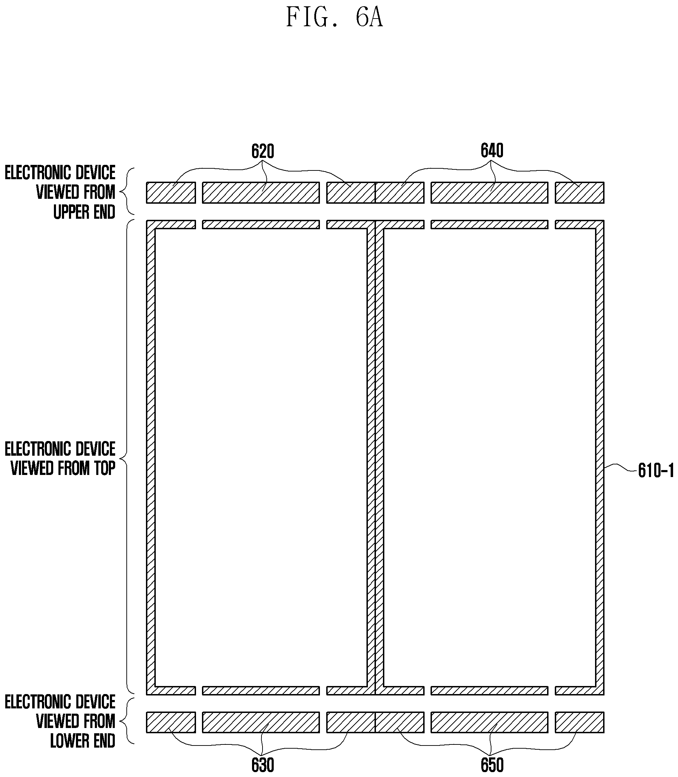

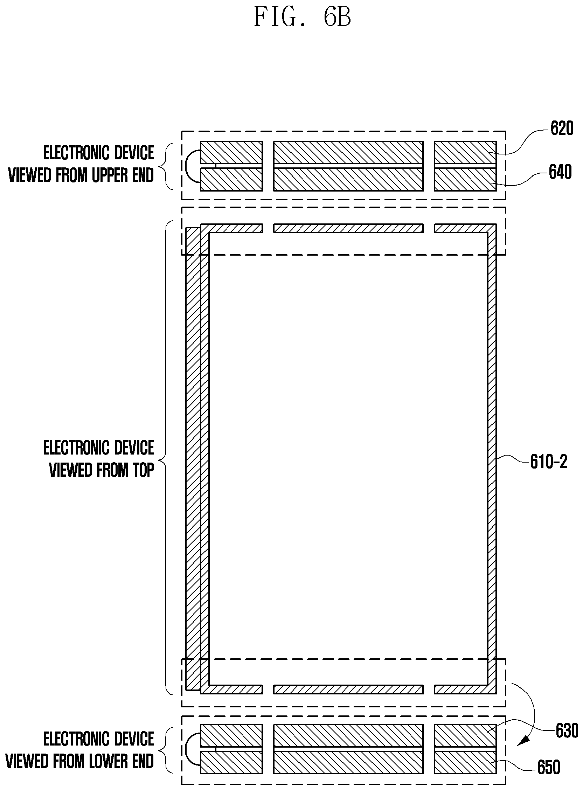

FIGS. 6A and 6B are diagrams illustrating an unfolded state and a folded state of different types of foldable electronic devices according to various embodiments.

With reference to FIGS. 6A and 6B, the foldable electronic device may be folded in a different direction from that of the foldable electronic device of FIGS. 2A and 2B. According to an embodiment, the foldable electronic device of FIGS. 6A and 6B may include more antennas than the foldable electronic device of FIGS. 2A and 2B. For example, the foldable electronic device of FIGS. 2A and 2B may include two antennas, and the foldable electronic device of FIGS. 6A and 6B may include four antennas. The foldable electronic device of FIGS. 6A and 6B may include four antennas to perform maximum 4*4 MIMO (4 layers) in the unfolded state and perform maximum 2*2 MIMO (2 layers) in the folded state.

With reference to FIGS. 6A and 6B, in the foldable electronic devices 610-1 and 610-2, two antennas 620 and 640 among four antennas 620, 630, 640, and 650 may be disposed at one side of the foldable electronic devices 610-1 and 610-2, and the other two antennas 630 and 650 may disposed at the other side of the foldable electronic devices 610-1 and 610-2. In some antennas (e.g., 620 and 630, 640 and 650) of the four antennas 620, 630, 640, and 650, even if the state of the foldable electronic device is changed, the gap between the antennas may be constant and in the remaining antenna (e.g., 620 and 640, and 630 and 650), when the state of the foldable electronic device is changed, the gap between antennas may be also changed.

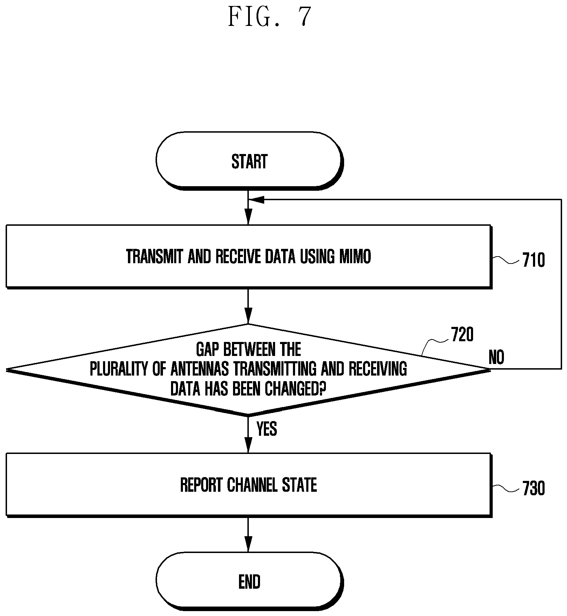

FIG. 7 is an example of a flowchart of the electronic device of FIGS. 6A and 6B according to various embodiments.

With reference to FIG. 7, in operation 710, the electronic device (e.g., the foldable electronic devices 610-1 and 610-2 of FIG. 6A or 6B) may transmit and receive data using MIMO. When using MIMO technology, the electronic device may transmit and receive data to and from the base station using a plurality of paths.

According to an embodiment, in operation 720, the electronic device may identify whether a gap between at least some antennas of the plurality of antennas has been changed. In the electronic device, a gap between some antennas of the plurality of antennas may change as the state of the electronic device is changed. As illustrated in FIGS. 6A and 6B, when the plurality of antennas are disposed at both ends of the electronic device and the electronic device has a foldable structure, the gap between some antennas of the plurality of antennas may be changed as the state of the electronic device is changed. The electronic device may identify whether the state of the electronic device has been changed to a folded state using sensors.

According to an embodiment, if the gap between the plurality of antennas has not been changed, the electronic device may perform operation 710.

According to an embodiment, in operation 730, if the gap between at least some antennas of the plurality of antennas has been changed, the electronic device may report the channel state to the base station. The electronic device may report the channel state to the base station using a channel state information (CSI) report message.

According to an embodiment, if the gap of at least some antennas of the plurality of antennas is confirmed that it has been changed, the electronic device may adjust an RI value in the CSI report message. For example, during a radio resource control (RRC) configuration process, the base station may configure a parameter reportQuantity in CSI-ReportConfig to at least one of'cri-RI-PMI-CQI', 'cri-RI-i1', 'cri-RI-i1-CQI', 'cri-RI-CQI', or 'cri-RI-LI-PMI-CQI'. If the state of the electronic device has been changed and the gap between at least some antennas of the plurality of antennas has been narrowed, the electronic device may adjust the RI value to a lower value by one level and transmit a CSI report message. According to an embodiment, the electronic device may configure differently the RI value according to the degree of folding. According to an embodiment, when the electronic device is folded, the electronic device may configure a predetermined threshold to the RI value. The RI value may vary according to a gap between antennas, an antenna performance, and a communication channel environment. For example, in the case that the state of the electronic device is changed from a state of FIG. 6A to a state of FIG. 6B, the electronic device may change the RI value from 4 to 1 and report it to the base station. As another example, in the case that the state of the electronic device is changed to a half-folded state in FIG. 6A, the electronic device may change the RI value from 4 to 2 and report it to the base station.

According to an embodiment, when the state of the electronic device is changed again, in order to change again the RI value, the electronic device may transmit a CSI report message. For example, when the state of the electronic device is changed to the unfolded state, the electronic device may configure the RI value to a previous RI value and transmit a CSI report message. For example, in the case that the state of the electronic device is changed from a state of FIG. 6B to a state of FIG. 6A, the electronic device may report the RI value from 1 to 4 to the base station. As another example, in the case that the state of the electronic device is changed from the half-folded state to the state of FIG. 6A, the electronic device may change the RI value from 2 to 4 and report it to the base station.

According to an embodiment, if the gap between at least some antennas of the plurality of antennas is changed, the electronic device may report values of RSRP and SINR in the CSI report message to a specific threshold. For example, during an RRC configuration process, the base station may configure a parameter reportQuantity in CSI-ReportConfig to at least one of 'csi-RSRP', 'csi-SINR', 'ssb-Index-RSRP', or 'ssb-Index-SINR'. If the state of the electronic device is changed and the gap between at least some antennas of the plurality of antennas is narrowed, the electronic device may configure values of RSRP and SINR to a specific threshold and transmit a CSI report message. The specific threshold may be, for example, a weak electric field value.

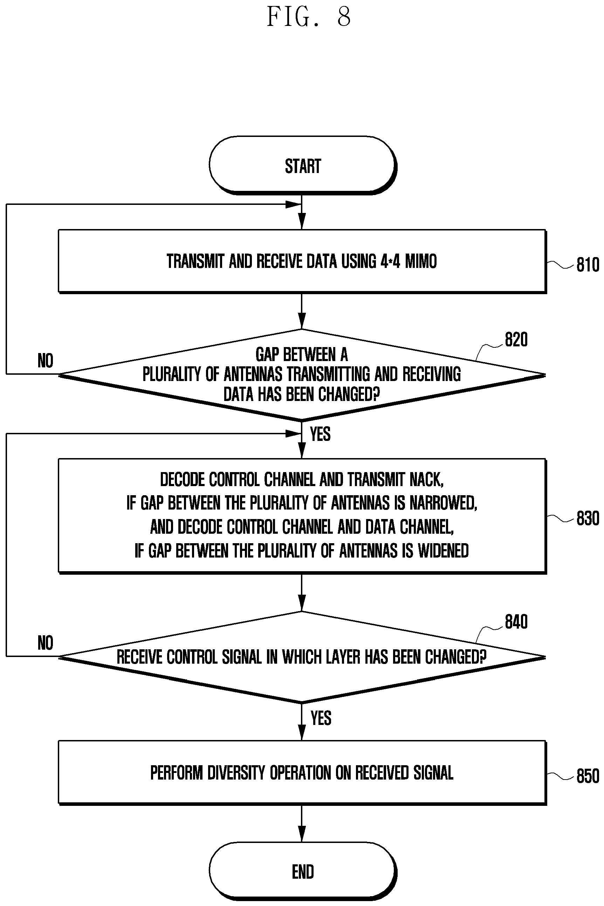

FIG. 8 is another example of a flowchart of the electronic device of FIGS. 6A and 6B according to various embodiments.

With reference to FIG. 8, in operation 810, the electronic device (e.g., the foldable electronic devices 610-1 and 610-2 of FIG. 6A or 6B) may transmit and receive data using 4*4 MIMO.

According to an embodiment, in operation 820, the electronic device may identify whether a gap between a plurality of antennas is changed. If the gap between a plurality of antennas is narrowed, the correlation between a plurality of paths increases; thus, it may be meaningless that the electronic device transmits and receives data to the base station through the plurality of paths. In order to determine whether it is meaningless to transmit and receive data through the plurality of paths, the electronic device may identify whether the gap between the plurality of antennas has been narrowed. If the gap between a plurality of antennas is widened, the correlation between a plurality of paths decreases; thus, it may be effective that the electronic device transmits and receives data to and from the base station through a plurality of paths. In order to determine whether to transmit and receive data through the plurality of paths is effective, the electronic device may identify whether the gap between the plurality of antennas has been widened. Operation 820 may be the same as or similar to operation 320 of FIG. 3, operation 420 of FIG. 4, and operation 520 of FIG. 5.

According to an embodiment, if the gap between the plurality of antennas has not been changed, the electronic device may perform operation 810. For example, while transmitting and receiving signals using MIMO, if the gap between the plurality of antennas has not been changed, the electronic device may transmit and receive signals using MIMO.

According to an embodiment, in operation 830, if the gap between the plurality of antennas is narrowed, the electronic device may decode the control channel (or control signal). Even if the gap between the plurality of antennas is narrowed by transmitting and receiving control channels using SISO, the electronic device may perform normal decoding of received signals. If the gap between the plurality of antennas is narrowed, the electronic device may not perform normal decoding of signals received using MIMO to transmit NACK to the base station. The electronic device may receive a signal using MIMO not to decode the data channel (or data signal). The electronic device may receive a signal using MIMO not to decode the data channel (or data signal) and transmit NACK corresponding to the data channel (or data signal) to the base station. As another example, the electronic device may deactivate a receiver related to MIMO during a data channel reception section. The electronic device may deactivate the receiver related to MIMO during the data channel reception section and transmit NACK corresponding to the data channel (or data signal) to the base station.

According to another embodiment, in operation 830, if the gap between the plurality of antennas is widened, the electronic device may decode the control channel (or control signal) and the data channel.

The subsequent operation may be performed after the electronic device previously identified that the gap between the plurality of antennas has been narrowed.

According to an embodiment, in operation 840, the electronic device may identify the decoded control channel to identify whether a layer has been changed. When the electronic device continues to transmit NACK, the base station may change the layer of the electronic device. The electronic device may not decode the data channel until the changed layer is received. When the electronic device does not decode the data channel, the electronic device may reduce unnecessary current consumption consumed in a decoding operation. For example, the base station may change the layer from 4 to 2 and transmit the changed layer.

According to an embodiment, in operation 850, if the layer has been changed, the electronic device may perform a diversity operation on the received signal. The electronic device may perform at least part of the operations of FIG. 3 during a diversity operation.

According to an embodiment, in the case that the state of the electronic device is changed again in a state in which the layer has been changed, in order to change an RI value, the electronic device may transmit a CSI report message. For example, when the state of the electronic device is changed to the unfolded state, the electronic device may configure the RI to 4 and transmit a CSI report message. According to another embodiment, in the case that the state of the electronic device is changed again in a state in which the layer has been changed, in order to report values of RSRP and SINR to a specific threshold, the electronic device may transmit a CSI report message.

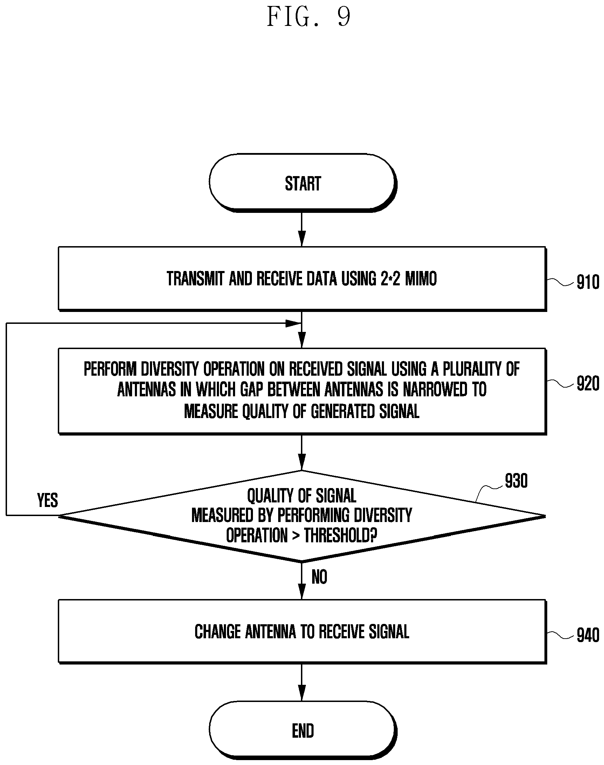

FIG. 9 is an example of a flowchart of the electronic device of FIG. 6B according to various embodiments.

The flowchart of the electronic device described with reference to FIG. 9 may be an operation of an electronic device including a plurality of antennas and whose state is changed from an unfolded state as illustrated in FIG. 6A to a folded state as illustrated in FIG. 6B.

According to an embodiment, in operation 910, the electronic device may transmit and receive data using 2*2 MIMO as the state thereof is changed from an unfolded state as illustrated in FIG. 6A to a folded state as illustrated in FIG. 6B.

According to an embodiment, in operation 920, the electronic device may perform a diversity operation on a received signal using a plurality of antennas in which the gap between antennas is narrowed to measure a quality of a generated signal. For example, when the gap between the first antenna 620 and the third antenna 640 is narrowed, as illustrated in FIG. 6B, the electronic device may perform a diversity operation on a signal received through the first antenna 620 and the third antenna 640. Further, the electronic device may perform a diversity operation on a signal received through the second antenna 630 and the fourth antenna 650. The electronic device may perform at least part of the operations of FIG. 3 during a diversity operation.

According to an embodiment, in operation 930, the electronic device may perform a diversity operation to identify whether a quality of the measured signal is higher than a threshold. The threshold may be a higher value by a predetermined value than a quality of a signal received by the electronic device using some antennas of the plurality of antennas. For example, the threshold may be a value higher than a quality of a signal received through the first antenna 620 or the third antenna 640. Alternatively, the threshold may be a value higher than a quality of a signal received through the second antenna 630 or the fourth antenna 650.

According to an embodiment, in operation 940, if a quality of the measured signal is not higher than a threshold, the electronic device may change the antenna to receive the signal. For example, the electronic device may reduce the number of antennas for transmitting and receiving data. The electronic device may stop an operation of an antenna that does not use. When an operation of the antenna is stopped, power is not supplied to related circuits, thereby reducing power consumption.

According to an embodiment, if a quality of the measured signal is higher than a threshold, the electronic device may perform a diversity operation.

According to another embodiment, the electronic device may identify whether the difference between a quality of a signal generated by performing a diversity operation and a quality of a signal received using some antennas of the plurality of antennas is greater than a threshold. For example, the electronic device may identify whether the difference between a quality of the signal generated by performing the diversity operation and a quality of a signal of a higher quality among qualities of signals received by each antenna is greater than a threshold.

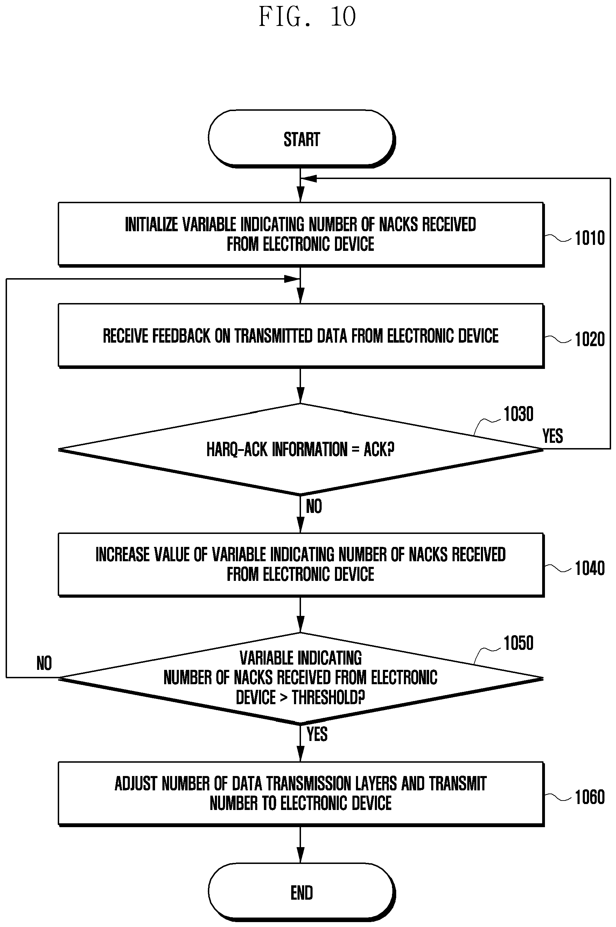

FIG. 10 is a flowchart of a base station according to various embodiments.

The base station of FIG. 10 may be a base station that communicates with the electronic device described above. The base station may receive a CSI report message from the electronic device, configure an RI of the electronic device, and perform communication with the electronic device.

With reference to FIG. 10, in operation 1010, the base station may initialize a variable indicating the number of NACKs received from the electronic device. For example, the number of NACKs received from the electronic device may be initialized to 0 as a variable C.

According to an embodiment, in operation 1020, the base station may receive feedback on transmitted data from the electronic device. For example, the base station may transmit data through a physical downlink shared channel (PDSCH). The base station may receive HARQ-ACK information in response to transmitted data.

According to an embodiment, in operation 1030, the base station may identify whether the HARQ-ACK information is ACK. If the HARQ-ACK information is ACK, the base station may perform again from operation 1010.

According to an embodiment, if the HARQ-ACK information is NACK, in operation 1040, the base station may increase a value of a variable indicating the number of NACKs received from the electronic device.

According to an embodiment, in operation 1050, the base station may identify whether a variable indicating the number of NACKs received from the electronic device is greater than a threshold. Alternatively, the base station may identify whether a variable indicating the number of NACKs received from the electronic device during a predetermined time period is greater than the threshold.

According to an embodiment, if a variable indicating the number of NACKs received from the electronic device is smaller than the threshold, the base station may perform again operation from operation 1020.

According to an embodiment, in operation 1060, if a variable indicating the number of NACKs received from the electronic device is greater than the threshold, the base station may adjust the number of data transmission layers and transmit the number to the electronic device. The base station may transmit the adjusted number of layers through a physical downlink control channel (PDCCH) using an 'antenna port(s) field' included in downlink control information (DCI).

According to an embodiment, when the base station continuously receives NACK during a predetermined time period or more or continuously receives a predetermined number of NACKs or more, the base station may determine that the state of the electronic device has been changed to adjust the number of layers of the electronic device, and transmit the adjusted number of the layer and/or a change indication of the adjusted number of layers to the electronic device through higher layer signaling (e.g., RRC signaling or MAC CE, and the like) or physical layer signaling (e.g., DCI transmitted through the PDCCH).

According to an embodiment, when a predetermined condition is satisfied after transmitting the adjusted number of layers to the electronic device, the base station may transmit data again with the previous number of layers and receive feedback. For example, when a predetermined time period passes, downlink butter data of the electronic device increases a specific threshold or more, or an RI indicating a higher number of layers than the adjusted number of layers is received from the electronic device, the base station may transmit data again with the previous number of layers and receive feedback.

According to an embodiment, the base station may directly adjust the number of layers or change an active bandwidth part (BWP) (e.g., transmit DCI including information indicating a change of a BWP through a PDCCH) to adjust the number of layers. The base station may configure a plurality of BWPs to the electronic device. Among the plurality of BWPs, a first BWP may be configured to transmit data with a large number of layers, and a second BWP may be configured to transmit data with a small number of layers. The base station may include a BWP in maxMIMO-Layers to perform RRC signaling. maxMIMO-Layers may be in included in a PDSCH-Config. IE included in a specific BWP configuration. If maxMIMO-Layers are not in included in a PDSCH-Config. IE, the electronic device may identify a maxMIMO-Layers value included in a PDSCH-ServingCellConfig IE with a value of a current BWP. According to an embodiment, a bandwidth of a BWP configured to a layer of a large value may be wider than that of a BWP configured to a layer of a small value.

An electronic device according to various embodiments of the disclosure may include a plurality of antennas; and a processor, wherein the processor may be configured to perform a diversity operation on signals received using the plurality of antennas, to determine whether the electronic device is in a folded state, to measure a quality of a signal generated by performing the diversity operation based on the determination, to identify whether the quality of the measured signal is higher than a threshold, and to receive the signal using only some antennas of the plurality of antennas, if the quality of the measured signal is not higher than a threshold, wherein the threshold may be a value determined based on the quality of the signal received by some antennas of the plurality of antennas.

The electronic device according to various embodiments of the disclosure may further include a sensor module, wherein the processor may be configured to determine whether the state of the electronic device has been changed using the sensor module.

In the electronic device according to various embodiments of the disclosure, the quality of the signal may be at least one of a signal gain, reference signals received power (RSRP), reference signal received quality (RSRQ), received signal strength indicator (RSSI), or signal to interference noise ratio (SINR).

The electronic device according to various embodiments of the disclosure may include a plurality of antennas; and a processor, wherein the processor may be configured to perform a multi input multi output (MIMO) operation with the plurality of antennas to receive a signal including a control channel and a data channel, to determine whether the electronic device is in a folded state, to decode the control channel among the received signals based on the determination, to transmit a NACK signal corresponding to the data channel to a base station after a designated data channel reception time has elapsed, to receive a signal including information on the changed number of MIMO layers from the base station, and to receive and decode a signal from the base station with the changed number of MIMO layers.

In the electronic device according to various embodiments of the disclosure, the processor may be configured to receive information in which a bandwidth part (BWP) is configured and to identify the changed number of layers.

In the electronic device according to various embodiments of the disclosure, the processor may be configured to measure a quality of a signal that has performed a diversity operation on a signal received using the plurality of antennas, to identify whether the quality of the measured signal is higher than a threshold, and to further receive a signal using only some antennas of the plurality of antennas, if the quality of the measured signal is not higher than a threshold, wherein the threshold may be a value determined based on the quality of the signal received by some antennas of the plurality of antennas.

In the electronic device according to various embodiments of the disclosure, if the electronic device is not in a folded state, the processor may be configured to configure a rank indicator (RI) to be lower than a previous value and to transmit the RI to the base station.

A base station according to various embodiments of the disclosure may include an antenna; and a processor, wherein the processor may be configured to transmit data to an electronic device using the antenna, to receive feedback on the transmitted data, to identify whether the received feedback is NACK, to identify whether NACK signals are continuously received from the electronic device during a predetermined time period or a predetermined number of times or more, if the received feedback is NACK, and to transmit information indicating the number of layers lower than a previous value to the electronic device, if NACK signals are continuously received from the electronic device during a predetermined time period or a predetermined number of times or more.

In the base station according to various embodiments of the disclosure, the number of lower layers may be indicated using bandwidth part (BWP) information.

In the base station according to various embodiments of the disclosure, when a predetermined time period elapses or an amount of downlink buffer data to the electronic device exceeds a predetermined capacity after transmitting information indicating the number of layers lower than the previous value, the processor may be configured to further transmit information indicating the number of layers greater than the number of transmitted layers.

A method of operating an electronic device according to various embodiments of the disclosure may include performing a diversity operation on signals received using a plurality of antennas; determining whether the electronic device is in a folded state; measuring a quality of a signal generated by performing the diversity operation based on the determination; identifying whether the quality of the measured signal is higher than a threshold; and receiving, if the quality of the measured signal is not higher than a threshold, a signal using only some antennas of the plurality of antennas, wherein the threshold may be a value determined based on the quality of the signal received by some antennas of the plurality of antennas.

In the method of operating an electronic device according to various embodiments of the disclosure, determining whether the electronic device is in a folded state may include determining whether the state of the electronic device has been changed using a sensor.

In the method of operating an electronic device according to various embodiments of the disclosure, the quality of the signal may be at least one of a signal gain, reference signals received power (RSRP), reference signal received quality (RSRQ), received signal strength indicator (RSSI), or signal to interference noise ratio (SINR).

The method of operating an electronic device according to various embodiments of the disclosure may include receiving a signal including a control channel and a data channel by performing a multi input multi output (MIMO) operation with a plurality of antennas; determining whether the electronic device is in a folded state; decoding the control channel among the received signals based on the determination; transmitting a NACK signal corresponding to the data channel to a base station after a designated data channel reception time has elapsed; receiving a signal including information on the changed number of MIMO layers from the base station; and receiving and decoding a signal from the base station with the changed number of MIMO layers.

In the method of operating an electronic device according to various embodiments of the disclosure, receiving a signal including information on the changed number of layers may include receiving information in which a bandwidth part (BWP) is configured and identifying the changed number of layers.

The method of operating an electronic device according to various embodiments of the disclosure may further include measuring a quality of a signal that has performed a diversity operation on a signal received using the plurality of antennas; identifying whether the quality of the measured signal is higher than a threshold; and receiving, if the quality of the measured signal is not higher than a threshold, a signal using only some antennas of the plurality of antennas, wherein the threshold may be a value determined based on the quality of the signal received by some antennas of the plurality of antennas.

The method of operating an electronic device according to various embodiments of the disclosure may further include configuring, if the electronic device is not in a folded state, a rank indicator (RI) to be lower than a previous value and transmitting the RI to the base station.

The method of operating a base station according to various embodiments of the disclosure may include transmitting data to an electronic device; receiving feedback on the transmitted data; identifying whether the received feedback is NACK; identifying, if the received feedback is NACK, whether NACK signals are continuously received from the electronic device during a predetermined time period or a predetermined number of times or more; and transmitting, if NACK signals are continuously received from the electronic device during a predetermined time period or a predetermined number of times or more, information indicating the number of layers lower than a previous value to the electronic device.

In the method of operating a base station according to various embodiments of the disclosure, the number of lower layers may be indicated using bandwidth part (BWP) information.

The method of operating a base station according to various embodiments of the disclosure may further include transmitting information indicating the number of layers greater than the number of transmitted layers, when a predetermined time period elapses or an amount of downlink buffer data to the electronic device exceeds a predetermined capacity after transmitting information indicating the number of layers lower than the previous value.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device, comprising:

   a plurality of antennas; and
   a processor,
   wherein the processor is configured to:

   perform a diversity operation on signals received using the plurality of antennas,
   determine whether the electronic device is in a folded state,
   measure a quality of a signal generated by performing the diversity operation based on the determination,
   identify whether the quality of the measured signal is higher than a threshold, and
   receive the signal using only some antennas of the plurality of antennas, if the quality of the measured signal is not higher than a threshold,
   wherein the threshold is a value determined based on the quality of the signal received by some antennas of the plurality of antennas.

2. The electronic device of claim 1, further comprising a sensor module,
   wherein the processor is configured to determine whether the state of the electronic device has been changed using the sensor module.

3. The electronic device of claim 1, wherein the quality of the signal is at least one of a signal gain, reference signals received power (RSRP), reference signal received quality (RSRQ), received signal strength indicator (RSSI), or signal to interference noise ratio (SINR).

4. An electronic device, comprising:

   a plurality of antennas; and
   a processor,
   wherein the processor is configured to:

   perform a multi input multi output (MIMO) operation with the plurality of antennas to receive a signal including a control channel and a data channel,
   determine whether the electronic device is in a folded state,
   decode the control channel among the received signals based on the determination,
   transmit a NACK signal corresponding to the data channel to a base station after a designated data channel reception time has elapsed,
   receive a signal including information on the changed number of MIMO layers from the base station, and
   receive and decode a signal from the base station with the changed number of MIMO layers.

5. The electronic device of claim 4, wherein the processor is configured to receive information in which a bandwidth part (BWP) is configured and identify the changed number of layers.

6. The electronic device of claim 4, wherein the processor is configured to:

   measure a quality of a signal that has performed a diversity operation on a signal received using the plurality of antennas,
   identify that the quality of the measured signal is higher than a threshold, and
   further receive a signal using only some antennas of the plurality of antennas, if the quality of the measured signal is not higher than a threshold,
   wherein the threshold is a value determined based on the quality of the signal received by some antennas of the plurality of antennas.

7. The electronic device of claim 6, wherein the processor is configured to configure a rank indicator (RI) to be lower than a previous value and to transmit the RI to the base station, if the electronic device is not in a folded state.

8. A base station, comprising:

   an antenna; and
   a processor,
   wherein the processor is configured to:

   transmit data to an electronic device using the antenna,
   receive feedback on the transmitted data,
   identify whether the received feedback is NACK,
   identify whether NACK signals are continuously received from the electronic device during a predetermined time period or a predetermined number of times or more, if the received feedback is NACK, and
   transmit information indicating the number of layers lower than a previous value to the electronic device, if NACK signals are continuously received from the electronic device during a predetermined time period or a predetermined number of times or more.

9. The base station of claim 8, wherein the number of lower layers is indicated using bandwidth part (BWP) information.

10. The base station of claim 8, wherein the processor is configured to further transmit information indicating the number of layers greater than the number of transmitted layers, when a predetermined time period elapses or an amount of downlink buffer data to the electronic device exceeds a predetermined capacity after transmitting information indicating the number of layers lower than the previous value.

11. A method of operating an electronic device, comprising:

    performing a diversity operation on signals received using a plurality of antennas;
    determining whether the electronic device is in a folded state;
    measuring a quality of a signal generated by performing the diversity operation based on the determination;
    identifying whether the quality of the measured signal is higher than a threshold; and
    receiving, if the quality of the measured signal is not higher than a threshold, a signal using only some antennas of the plurality of antennas,
    wherein the threshold is a value determined based on the quality of the signal received by some antennas of the plurality of antennas.

12. The method of claim 11, wherein determining whether the electronic device is in a folded state comprises determining whether the state of the electronic device has been changed using a sensor.

13. The method of claim 11, wherein the quality of the signal is at least one of a signal gain, reference signals received power (RSRP), reference signal received quality (RSRQ), received signal strength indicator (RSSI), or signal to interference noise ratio (SINR).

14. A method of operating an electronic device, comprising:

receiving a signal including a control channel and a data channel by performing a multi input multi output (MIMO) operation with a plurality of antennas;
determining whether the electronic device is in a folded state;
decoding the control channel among the received signals based on the determination;
transmitting a NACK signal corresponding to the data channel to a base station after a designated data channel reception time has elapsed;
receiving a signal including information on the changed number of MIMO layers from the base station; and
receiving and decoding a signal from the base station with the changed number of MIMO layers.

15. The method of claim 14, wherein receiving a signal including information on the changed number of layers comprises receiving information in which a bandwidth part (BWP) is configured and identifying the changed number of layers.

# FIG. 1

ELECTRONIC DEVICE 101

INPUT MODULE 150

SOUND OUTPUT MODULE 155

DISPLAY MODULE 160

BATTERY 189

POWER MANAGEMENT MODULE 188

AUDIO MODULE 170

HAPTIC MODULE 179

MEMORY 130
VOLATILE MEMORY 132
NON-VOLATILE MEMORY 134
INTERNAL MEMORY 136
EXTERNAL MEMORY 138

PROCESSOR 120
MAIN PROCESSOR 121
AUXILIARY PROCESSOR 123

SENSOR MODULE 176

CAMERA MODULE 180

COMMUNICATION MODULE 190
WIRELESS COMMUNICATION MODULE 192
WIRED COMMUNICATION MODULE 194

SUBSCRIBER IDENTIFICATION MODULE 196

ANTENNA MODULE 197

INTERFACE 177

CONNECTION TERMINAL 178

PROGRAM 140
APPLICATION 146
MIDDLE WARE 144
OPERATING SYSTEM 142

100

SECOND NETWORK 199

FIRST NETWORK 198

ELECTRONIC DEVICE 104

ELECTRONIC DEVICE 102

SERVER 108

17

EP 4 395 196 A1

# FIG. 2A

220

FIRST ANTENNA

ELECTRONIC DEVICE
VIEWED FROM UPPER END

ELECTRONIC DEVICE
VIEWED FROM TOP

210-1

ELECTRONIC DEVICE
VIEWED FROM LOWER END

SECOND ANTENNA

230

FIG. 2B

ELECTRONIC DEVICE
VIEWED FROM TOP

210-2

ELECTRONIC DEVICE
VIEWED FROM LOWER END

220

230

FIG. 3

START

PERFORM DIVERSITY OPERATION ON RECEIVED SIGNAL USING A PLURALITY OF ANTENNAS — 310

GAP BETWEEN THE PLURALITY OF ANTENNAS TRANSMITTING AND RECEIVING DATA HAS BEEN CHANGED? — 320   NO

YES

MEASURE QUALITY OF SIGNAL IN WHICH DIVERSITY OPERATION IS PERFORMED — 330

YES   QUALITY OF MEASURED SIGNAL > THRESHOLD? — 340

NO

CHANGE ANTENNA TO RECEIVE SIGNAL — 350

END

FIG. 4

```
                    ┌──────────────┐
                    │    START     │
                    └──────┬───────┘
                           │
                           ▼
        ┌──────────────────────────────────────────┐
        │  TRANSMIT AND RECEIVE DATA WITHOUT USING   │──── 410
        │                  MIMO                      │
        └──────────────────┬─────────────────────────┘
                           │
                           ▼
                  ╱────────────────╲          420
                ╱  GAP BETWEEN THE   ╲
              ╱ PLURALITY OF ANTENNAS  ╲   NO
             ╲ TRANSMITTING AND RECEIVING╱───────┐
              ╲ DATA HAS BEEN CHANGED?  ╱         │
                ╲                      ╱          │
                  ╲──────────────────╱            │
                           │                      │
                         YES                      │
                           ▼                      │
        ┌──────────────────────────────────────┐  │
        │               ADJUST RI               │── 430
        └──────────────────┬─────────────────────┘
                           │
                           ▼
                    ┌──────────────┐
                    │     END      │
                    └──────────────┘
```

# FIG. 5

START

TRANSMIT AND RECEIVE DATA USING MIMO — 510

GAP BETWEEN THE PLURALITY OF ANTENNAS TRANSMITTING AND RECEIVING DATA HAS BEEN CHANGED? — 520

NO

YES

DECODE CONTROL CHANNEL AND TRANSMIT NACK, IF GAP BETWEEN THE PLURALITY OF ANTENNAS IS NARROWED, AND DECODE CONTROL CHANNEL AND DATA CHANNEL, IF GAP BETWEEN THE PLURALITY OF ANTENNAS IS WIDENED — 530

RECEIVE CONTROL SIGNAL IN WHICH LAYER HAS BEEN CHANGED? — 540

NO

YES

PERFORM DIVERSITY OPERATION ON RECEIVED SIGNAL — 550

END

# FIG. 6A

ELECTRONIC DEVICE VIEWED FROM UPPER END

620  640

ELECTRONIC DEVICE VIEWED FROM TOP

610-1

ELECTRONIC DEVICE VIEWED FROM LOWER END

630  650

FIG. 6B

ELECTRONIC DEVICE
VIEWED FROM UPPER END

620

640

ELECTRONIC DEVICE
VIEWED FROM TOP

610-2

ELECTRONIC DEVICE
VIEWED FROM LOWER END

630

650

FIG. 7

```
                    ┌──────────────┐
                    │    START     │
                    └──────┬───────┘
                           │
        ┌──────────────────▼──────────────────┐
        │  TRANSMIT AND RECEIVE DATA USING MIMO│──── 710
        └──────────────────┬──────────────────┘
                           │
                       ╱───▼───╲
              ╱── GAP BETWEEN THE ──╲         720
        ╱ PLURALITY OF ANTENNAS TRANSMITTING AND RECEIVING ╲── NO
        ╲     DATA HAS BEEN CHANGED?     ╱
              ╲─────┬─────╱
                    │ YES
        ┌───────────▼──────────────┐
        │    REPORT CHANNEL STATE   │──── 730
        └───────────┬──────────────┘
                    │
            ┌───────▼───────┐
            │      END      │
            └───────────────┘
```

# FIG. 8

```
                        ┌─────────────┐
                        │    START    │
                        └──────┬──────┘
                               │
       ┌───────────────────────┼───────────────────────┐
       │                       ▼                        │
       │   ┌─────────────────────────────────────────┐  │
       │   │  TRANSMIT AND RECEIVE DATA USING 4*4 MIMO│──┼── 810
       │   └─────────────────────────────────────────┘  │
       │                       │                        │
       │                       ▼                        │
       │              GAP BETWEEN A                      820
   NO ◄┤  PLURALITY OF ANTENNAS TRANSMITTING AND RECEIVING
       │        DATA HAS BEEN CHANGED?                   │
       │                       │ YES                    │
```

GAP BETWEEN A PLURALITY OF ANTENNAS TRANSMITTING AND RECEIVING DATA HAS BEEN CHANGED? — 820

DECODE CONTROL CHANNEL AND TRANSMIT NACK,
IF GAP BETWEEN THE PLURALITY OF ANTENNAS IS NARROWED,
AND DECODE CONTROL CHANNEL AND DATA CHANNEL,
IF GAP BETWEEN THE PLURALITY OF ANTENNAS IS WIDENED — 830

RECEIVE CONTROL SIGNAL IN WHICH LAYER HAS BEEN CHANGED? — 840

NO

YES

PERFORM DIVERSITY OPERATION ON RECEIVED SIGNAL — 850

END

# FIG. 9

START

TRANSMIT AND RECEIVE DATA USING 2*2 MIMO — 910

PERFORM DIVERSITY OPERATION ON RECEIVED SIGNAL USING A PLURALITY OF ANTENNAS IN WHICH GAP BETWEEN ANTENNAS IS NARROWED TO MEASURE QUALITY OF GENERATED SIGNAL — 920

QUALITY OF SIGNAL MEASURED BY PERFORMING DIVERSITY OPERATION > THRESHOLD? — 930

YES

NO

CHANGE ANTENNA TO RECEIVE SIGNAL — 940

END

# FIG. 10

START

INITIALIZE VARIABLE INDICATING NUMBER OF NACKS RECEIVED FROM ELECTRONIC DEVICE — 1010

RECEIVE FEEDBACK ON TRANSMITTED DATA FROM ELECTRONIC DEVICE — 1020

HARQ-ACK INFORMATION = ACK? — 1030

YES

NO

INCREASE VALUE OF VARIABLE INDICATING NUMBER OF NACKS RECEIVED FROM ELECTRONIC DEVICE — 1040

VARIABLE INDICATING NUMBER OF NACKS RECEIVED FROM ELECTRONIC DEVICE > THRESHOLD? — 1050

NO

YES

ADJUST NUMBER OF DATA TRANSMISSION LAYERS AND TRANSMIT NUMBER TO ELECTRONIC DEVICE — 1060

END

<div align="center">

**INTERNATIONAL SEARCH REPORT**

</div>

| International application No. |
| --- |
| **PCT/KR2022/014569** |

**A.    CLASSIFICATION OF SUBJECT MATTER**

**H04B 7/06**(2006.01)i; **H04B 7/0404**(2017.01)i; **H04B 17/318**(2015.01)i; **H04B 17/336**(2015.01)i; **H04M 1/02**(2006.01)i; **H04W 72/04**(2009.01)i

According to International Patent Classification (IPC) or to both national classification and IPC

**B.    FIELDS SEARCHED**

Minimum documentation searched (classification system followed by classification symbols)

H04B 7/06(2006.01); H01Q 1/24(2006.01); H01Q 1/52(2006.01); H04B 1/3827(2015.01); H04B 7/04(2006.01); H04B 7/0413(2017.01); H04M 1/02(2006.01); H04M 1/725(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다이버시터(diversity), 접힘(folding), 품질(quality), 임계값(threshold), 안테나(antenna), MIMO 레이어(multi input multi output layer), NACK(negative acknowledgement)

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2020-0344336 A1 (BEIJING XIAOMI MOBILE SOFTWARE CO., LTD.) 29 October 2020 (2020-10-29)<br>See paragraphs [0035], [0042], [0045]-[0046], [0054] and [0059]; and figures 2-3 and 5-7. | 1-3,6-7,11-13 |
| Y | US 2021-0075459 A1 (SAMSUNG ELECTRONICS CO., LTD.) 11 March 2021 (2021-03-11)<br>See paragraphs [0193], [0195] and [0200]-[0202]; and figure 11. | 1-3,6-7,11-13 |
| Y | US 2014-0064392 A1 (TELEFONAKTIEBOLAGET L M ERICSSON (PUBL)) 06 March 2014 (2014-03-06)<br>See paragraphs [0069], [0160], [0166] and [0190]; and figure 19. | 4-10,14-15 |
| Y | US 2021-0126992 A1 (SAMSUNG ELECTRONICS CO., LTD.) 29 April 2021 (2021-04-29)<br>See paragraphs [0097], [0130], [0146]-[0147], [0150]-[0152] and [0183]-[0187]; and figure 8. | 4-10,14-15 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 December 2022** | **27 December 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/014569**

**C.    DOCUMENTS CONSIDERED TO BE RELEVANT**

| Category* | Citation of document, with indication, where appropriate, of the relevant passages | Relevant to claim No. |
|---|---|---|
| A | CN 110113459 A (VIVO MOBILE COMMUNICATION CO., LTD.) 09 August 2019 (2019-08-09) See claims 1-5. | 1-15 |

Form PCT/ISA/210 (second sheet) (July 2022)

**INTERNATIONAL SEARCH REPORT**
Information on patent family members

| International application No. |
|---|
| **PCT/KR2022/014569** |

| Patent document cited in search report | | | Publication date (day/month/year) | Patent family member(s) | | | Publication date (day/month/year) |
|---|---|---|---|---|---|---|---|
| US | 2020-0344336 | A1 | 29 October 2020 | EP | 3731060 | A1 | 28 October 2020 |
| | | | | JP | 2021-524165 | A | 09 September 2021 |
| | | | | JP | 7065112 | B2 | 11 May 2022 |
| | | | | KR | 10-2020-0125892 | A | 05 November 2020 |
| | | | | KR | 10-2195811 | B1 | 29 December 2020 |
| | | | | RU | 2737612 | C1 | 01 December 2020 |
| | | | | RU | 2737612 | C9 | 03 February 2021 |
| | | | | US | 10827046 | B1 | 03 November 2020 |
| | | | | WO | 2020-215519 | A1 | 29 October 2020 |
| US | 2021-0075459 | A1 | 11 March 2021 | CN | 114402270 | A | 26 April 2022 |
| | | | | EP | 3987506 | A1 | 27 April 2022 |
| | | | | KR | 10-2021-0031309 | A | 19 March 2021 |
| | | | | US | 11211961 | B2 | 28 December 2021 |
| | | | | WO | 2021-049917 | A1 | 18 March 2021 |
| US | 2014-0064392 | A1 | 06 March 2014 | AR | 089906 | A1 | 01 October 2014 |
| | | | | AU | 2013-240631 | A1 | 04 September 2014 |
| | | | | AU | 2013-240631 | B2 | 09 June 2016 |
| | | | | CN | 104115436 | A | 22 October 2014 |
| | | | | CN | 104115436 | B | 29 December 2017 |
| | | | | CN | 104205706 | A | 10 December 2014 |
| | | | | CN | 104205706 | B | 25 August 2017 |
| | | | | EP | 2748961 | A1 | 02 July 2014 |
| | | | | EP | 2748961 | B1 | 21 October 2015 |
| | | | | EP | 2813021 | A2 | 17 December 2014 |
| | | | | TW | 201345188 | A | 01 November 2013 |
| | | | | US | 2014-0133471 | A1 | 15 May 2014 |
| | | | | US | 2014-0245095 | A1 | 28 August 2014 |
| | | | | US | 2015-0256295 | A1 | 10 September 2015 |
| | | | | US | 9148258 | B2 | 29 September 2015 |
| | | | | US | 9276707 | B2 | 01 March 2016 |
| | | | | US | 9325397 | B2 | 26 April 2016 |
| | | | | WO | 2013-119169 | A2 | 15 August 2013 |
| | | | | WO | 2013-119169 | A3 | 14 November 2013 |
| | | | | WO | 2013-141772 | A1 | 26 September 2013 |
| | | | | WO | 2013-147672 | A1 | 03 October 2013 |
| | | | | ZA | 201405861 | B | 23 December 2015 |
| US | 2021-0126992 | A1 | 29 April 2021 | KR | 10-2021-0050906 | A | 10 May 2021 |
| | | | | US | 11425233 | B2 | 23 August 2022 |
| | | | | WO | 2021-085937 | A1 | 06 May 2021 |
| CN | 110113459 | A | 09 August 2019 | CN | 110113459 | B | 15 October 2021 |
| | | | | WO | 2020-238450 | A1 | 03 December 2020 |

Form PCT/ISA/210 (patent family annex) (July 2022)